# EUROPEAN PATENT SPECIFICATION

(11) **EP 4 148 000 B1**
(45) Date of publication and mention of the grant of the patent: **06.12.2023**
(21) Application number: 21382829.6
(22) Date of filing: 14.09.2021
(51) Int. Cl.: B65D 85/804

(54) **A CAPSULE FOR CONTAINING BEVERAGE INGREDIENTS WITH A SEALING MEMBER**
KAPSEL ZUR AUFNAHME VON GETRÄNKEZUTATEN MIT EINEM DICHTUNGSELEMENT
CAPSULE POUR CONTENIR DES INGRÉDIENTS DE BOISSONS DOTÉE D'UN ÉLÉMENT D'ÉTANCHÉITÉ

(43) Date of publication of application: 15.03.2023
(73) Proprietor: Albmarserg Inversiones, SL, 31500 Navarra (ES)
(72) Inventor: VILARDELL PARÉS, Albert, 08329 Teià (ES)
(74) Representative: ZBM Patents - Zea, Barlocci & Markvardsen

(56) References cited:
- WO-A1-2019/092144
- WO-A1-2020/225390
- WO-A1-2021/089826

## Description

The present disclosure relates to capsules for containing beverage ingredients with a sealing member and methods of manufacturing such capsules.

### BACKGROUND

Capsules containing beverages ingredients from which beverages can be produced may be inserted in a beverage production machine. For example, these types of capsules may be used for producing coffee, chocolate, milk products or tea. Depending on the beverage production machine, capsules may be for example cup-shaped or disc-shaped.

Capsules for Nespresso^{®} coffee machines may have a cup-shaped body or a frustoconical body which defines a cavity to contain the beverage ingredients, e.g. ground coffee. The body usually comprises an annular flange on which a closing member is attached so as to close the cavity of body. The body of this type of capsules is generally manufactured from aluminum. However, in other examples, the capsule may be manufactured from other materials such as paper and/or cardboard.

Beverage production machines generally comprise a capsule holder with a plurality of relief elements and an enclosing member that moves relative to the capsule holder to accommodate the capsule therebetween. In order to produce a beverage from the beverage ingredients contained in the capsule, the capsule is inserted in a brewing chamber of the beverage production machine defined between the capsule holder and the enclosing member. Then, the enclosing member is moved towards the capsule holder to press a portion of the capsule against the capsule holder. For example, the flange of the body of the capsule may be pressed between a pressing portion of the enclosing member and the capsule holder. A cutting element generates an opening in a wall of the capsule, e.g. in an upper surface. Pressurized water and/or hot water is injected into the capsule through the opening and interacts with the ingredients contained in the capsule. The pressure inside the capsule increases and the relief elements of the capsule holder tear a wall of the capsule, e.g. the closing member of the capsule. Beverage produced inside the capsule is thus allowed to exit e.g. through the apertures generated on the closing member.

Sealing elements may be provided between the capsule and the enclosing member to prevent a drop of pressure inside the capsule. A sufficient pressure is a key factor for the quality of espresso-style coffee. The sealing member may be arranged at the capsule, e.g. on the flange, and/or at the enclosing member. For example, sealing members arranged on the flange of the capsule may be pressed by the pressing portion of the enclosing member. Air and/or water leakage from the chamber is thus minimized.

In some examples, the sealing member is made from rubber or silicone. These sealing members may elastically deform to fit the shape of the pressing portion of the enclosing member. However, these materials are expensive and difficult to be recycled.

In other examples, like for example in WO 2021/089826 A1, the sealing member is made from a metal, e.g. aluminum. The sealing member of metal is deformed by the effect of the pressing portion of the enclosing member. Consequently, greater forces are generally required to close the capsule between the enclosing member and the capsule holder. This may accelerate the deterioration of the beverage production device.

In further examples, the sealing member is made from a cellulose material such as paper or cardboard. Some sealing members made from paper or cardboard may deform to fit the pressing portion of the enclosing member. This type of sealing members may absorb water flowing between the body of the capsule and an internal wall of the enclosing member. This water absorption may cause the sealing member to be expanded. This expansion may allow the sealing member to fit or to be adapted to the surface of the pressing portion of the enclosing member.

Some sealing members may be colored. Colors may be used to identify the content of the capsule. For example, one color may be used to indicate that the capsule contains decaffeinated ground coffee and another color may be used to indicate that the capsule contains a specific type of ground coffee.

Sealing members made from a metal may be printed or painted to indicate the content of the capsule. A colored ink may be deposited on the outer surface of the metallic sealing member. In some examples, a protective coating layer may be applied over the deposited colored ink to protect and to fix this colored ink.

Sealing members made from a cellulose material may also be painted, i.e. depositing a colored ink on the outer surface of the cellulose material. However, painting the cellulose material may reduce the elasticity of the material and its capacity of absorbing water, which negatively affects the adaptability of the sealing member to the shape of the pressing portion of the enclosing member. Sealing effect of the sealing member is thus reduced. In addition, the high temperatures to which the sealing member are subjected may cause the ink to adhere to the pressing portion of the enclosing member. This may cause the cellulose material of the sealing member to tear or peel off which also reduces the sealing effect.

An external protective layer, e.g. a varnished layer or a lacquer, may be provided above the inked cellulose material to avoid the ink to adhere to the pressing portion of the enclosing member. However, the external protective layer covering the ink increases the rigidity of the outermost layer of the sealing member. This reduces the capacity of the sealing to fill the gap between the flange and the shape of the pressing portion of the enclosing member, i.e. to fit the shape of the pressing portion. In addition, the force required to close the enclosing member is increased.

The present disclosure provides examples of devices that at least partially resolve some of the aforementioned disadvantages.

### SUMMARY

In a first aspect, a capsule for containing beverage ingredients configured to be inserted in a beverage production device is provided. The capsule comprises a body defining a cavity to contain beverage ingredients. The body comprises an upper portion and a lower portion, a sidewall extending from the upper portion to the lower portion, wherein the lower portion comprises an annular flange outwardly extending from the sidewall, the annular flange comprising an upper side facing towards the upper portion of the body.

The capsule further comprises a sealing member arranged on the upper side of the annular flange. The sealing member comprises an inner layer facing the upper side of the annular flange comprising an adhesive and an outer layer having a mass-colored cellulose material. Accordingly, the outer layer made consisting of a mass-colored cellulose material faces a pressing portion of an enclosing member when the capsule is inserted in a beverage production device.

According to this aspect, a capsule for a beverage production device with a colored sealing means having an improved sealing effect is provided. The sealing effect of provided by the sealing member according to this aspect is substantially similar to the sealing effect provided by a non-colored sealing member made of a cellulose material.

Contrary to other coloring techniques such as painting or depositing ink on the outer surface of the sealing member, in a mass-colored or a mass-pigmentation process a colorant or a pigment is added during the manufacturing of the cellulose material. Pigments or colorants are added to a mix of cellulose fibers and water that are the raw materials of a mass-colored cellulose material. Colorants are thus integrated within the fibers of the cellulose material, e.g. paper and/or cardboard.

As the colorants are integrated within the fibers of the cellulose material, the porosity of the cellulose material is not adversely affected as in other coloring techniques in which the pores are filled with ink. Accordingly, the color of the cellulose material does not affect the capacity of the cellulose material to absorb water. In addition, the color is substantially uniform at any point of the mass-colored cellulose material, i.e. the density of colorants is substantially uniform along the mass-colored cellulose material.

Providing a sealing member having an outer layer made from a mass-colored cellulose material allows the outer layer to fit a pressing portion of an enclosing member of a beverage production device. The outer layer is thus configured to absorb a predetermined amount of water. This predetermined amount of water may substantially correspond to the amount of water capable to be absorbed by an outer layer made of a non-painted cellulose material Furthermore, the outer layer of the sealing member is configured to expand or swell when water is absorbed. When water flows between the body of the capsule and the lateral walls of the enclosing member, water may enter in contact with outer layer of the sealing member.

As the colorants are integrated within the outer layer of the sealing member, water may be absorbed by the pores of this outer layer. The water absorption capacity of this type of sealing member is improved when compared to other sealing members involving painting or depositing ink. The water absorption capacity of the sealing member according to this disclosure is thus similar to the water absorption capacity of a sealing member comprising a non-colored cellulose material. Furthermore, the expansion of the outer layer is improved, since the outer layer is less rigid that in painted sealing members and more water can be absorbed.

In addition, in painted or inked sealing members made from a cellulose material, the ink or the paint only reaches the outermost portion of the sealing member. The color decreases with the depth of the cellulose sealing member. However, in mass-colored outer layers, the color is substantially uniform along the thickness of the outer layer. Density of colorants is thus substantially uniform along the thickness of the outer layer. This may further improve the color uniformity and appearance.

Examples of cellulose material may be paper and/or cardboard. Accordingly, the mass-colored cellulose material may be a mass-colored paper or a mass-colored cardboard.

In a further aspect, a method of manufacturing a capsule according to any of the examples herein described is provided. The method includes shaping the body of the capsule, forming the sealing member and adhering the sealing member to the upper side of the annular flange through the adhesive of the inner layer of the sealing member. Forming the sealing member comprises providing a sheet comprising a mass-colored cellulose material layer and an adhesive layer to respectively form the outer layer and the inner layer of the sealing member and cutting the sheet to form the sealing member. A method for manufacturing capsules according to any of the examples herein disclosed is thus provided.

Advantages derived from this second aspect may be similar to those mentioned regarding the capsule of the first aspect.

### BRIEF DESCRIPTION OF THE DRAWINGS

Non-limiting examples of the present disclosure will be described in the following, with reference to the appended drawings, in which:
Figure 1 schematically represents an example of a capsule for containing beverage ingredients according to an example of the present disclosure;
Figure 2 schematically represents an example of a capsule for containing beverage ingredients according to an example of the present disclosure;
Figure 3 schematically represents an example of a capsule for containing beverage ingredients inserted in a beverage production device according to an example of the present disclosure;
Figure 4a and 4b respectively shows a zoom-in view of the sealing member in non-expanded configuration and in an expanded configuration according to an example of the present disclosure.
Figure 5 schematically represents a cross-sectional view of the sealing member according to an example of the present disclosure;
Figure 6 schematically represents a cross-sectional view of the sealing member according to an example of the present disclosure;
Figure 7 is a block diagram of a method of manufacturing a capsule according to an example of the present disclosure; and
Figure 8 is a block diagram of a method of providing a sheet comprising a mass-colored cellulose material layer and an adhesive layer to respectively form an outer layer and an inner layer of a sealing member according to an example of the present disclosure.

### DETAILED DESCRIPTION OF EXAMPLES

In these figures the same reference signs have been used to designate matching elements.

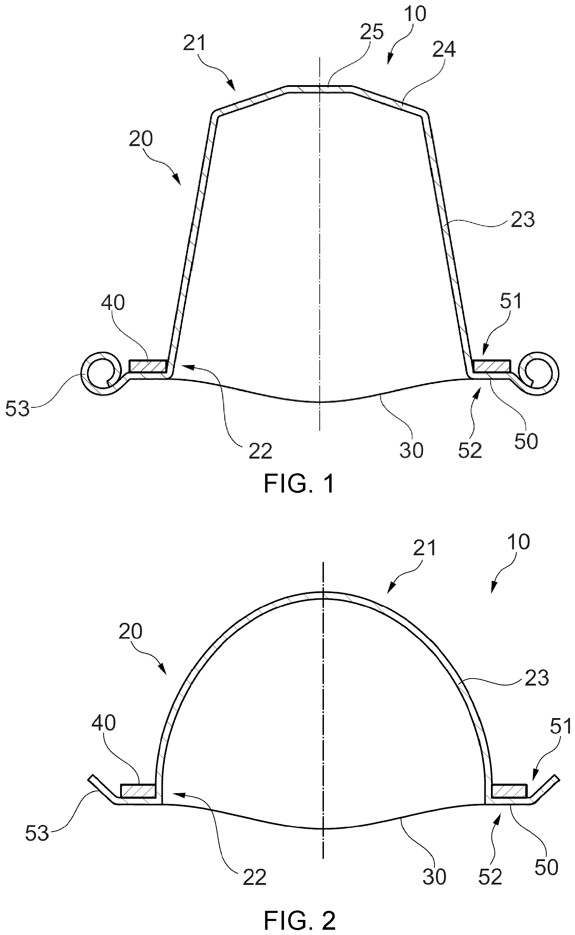

Figure 1 schematically represents a capsule 10 having a body 20 defining a cavity that contains beverage ingredients. The capsule 10 can be inserted in a beverage production device, such as a Nespresso^{®} coffee machine. The body 20 of this example has a substantially frustoconical shape. In other examples, the body may comprise a substantially semi-spherical shape.

The body 20 extends from an upper portion 21 to a lower portion 22. A sidewall 23 extends between the upper portion 21 and the lower portion 22. In this example, a diameter of the body 20 decrease from the lower portion 22 to the upper portion 21.

In figure 1, the upper portion 21 comprises a substantially flat wall 25 and an inclined wall 24. The inclined wall 24 extends from the sidewall 23 to the flat wall 25. The upper portion 21, e.g. the flat wall 25, may be perforated by a cutting element of a beverage production device to inject hot water inside the cavity of the body 20 of the capsule 10.

The lower portion 22 comprises an annular flange 50. The annular flange 50 outwardly extends from the sidewall 23. The annular flange 50 of this example comprises un upper side 51 and a lower side 52. The upper side 51 faces the upper portion 21 of the body 20. In this figure, the lower side 52 is arranged opposite to the upper side 51. The annular flange 50 of figure 1 comprises a rim or a perimeter edge 53 arranged at the outermost portion of the flange 50. In this example, the perimeter edge comprises a circular shape. An annular channel is defined in the circular shape of the perimeter edge of this figure. The upper side 51 of this example comprises a substantially flat surface between the sidewall 23 and the perimeter edge 53. The upper side 51 thus extends a length from the sidewall 23 to the perimeter edge 53.

In this figure, a closing member 30 closes the cavity formed by the body 20. The closing member 30 is attached to the annular flange 50. A rim portion of the closing member 30 is attached to the lower side 52 of the flange 50, for example by welding or using an adhesive. The closing member may be teared by relief elements arranged on a capsule holder of a beverage production device to drain the beverage created inside the capsule.

The capsule 10 further comprises a sealing member 40 arranged on the upper side 51 of the annular flange 50. The sealing member 40 of this figure is an annular ring that extends along the whole perimeter of the capsule. In other examples, a plurality of sealing members may be arranged on the flange. The sealing member 40 of this figure substantially extends along the length of the upper side 51, i.e. the sealing member substantially extends from the sidewall 23 to the perimeter edge 53. In other examples, the sealing member may extend along a portion of the length of the upper side.

The sealing member 40 comprises an inner layer facing the upper side 51 of the annular flange 50. This inner layer comprises an adhesive to adhere the sealing member 40 to the upper side 51 of the flange 50. The sealing member 40 further comprises an outer layer having a mass-colored cellulose material. The outer layer is the outermost or the uppermost part of the sealing member 40. The outer layer is thus configured to face the pressing portion of the enclosing member of a beverage production device. The mass-colored cellulose material thus faces the pressing portion of the enclosing member when the capsule is inserted in the beverage production device.

The colorants employed during the manufacturing the production of the mass-colored cellulose material, e.g. mass-colored paper, may be suitable for food contact. In this way, a potential contamination derived from the colorant contacting the beverage is prevented.

Figure 2 schematically represents an example of a capsule 10 for containing beverage ingredients according to an example of the present disclosure. The capsule 10 of this figure may be inserted in a beverage production device having an internal shape corresponding to the shape of this capsule. The body 20 of the capsule 10 of this example comprises a substantially semispherical shape. A rounded sidewall 23 extends from the lower portion 22 to the upper portion 21.

As in the example of figure 1, the body 20 comprises an annular flange 50 outwardly extending from the sidewall 23. The annular flange 50 of this figure comprises an upper side 51 and a lower side 52. A closing member 30 is attached to the lower side 52 of the annular flange 50 to close the internal cavity formed by the body 20.

The annular flange 50 of figure 1 comprises a rim or a perimeter edge 53 arranged at the outermost portion of the flange 50. The perimeter edge 53 comprises an inclined portion. In some examples, the perimeter edge may be substantially flat or rounded, e.g. as depicted in Figure 1.

A sealing member 40 is arranged on the upper side 51 of the annular flange 50. In this example, the sealing member is an annular ring. The sealing member 40 comprises an outer layer made from mass-colored cellulose material, e.g. a mass-colored paper. The sealing member of this example may be according to any of the examples herein disclosed.

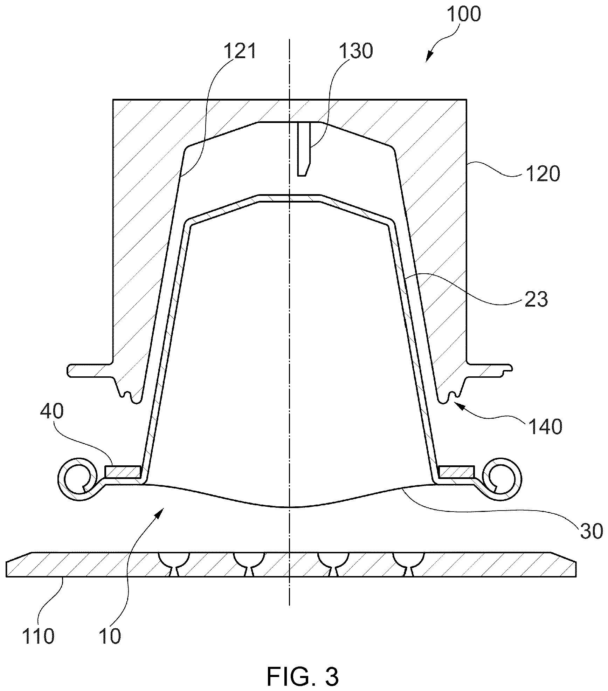

Figure 3 schematically represents a capsule 10 inserted in a beverage production device 100 according to an example of the present disclosure. The capsule 10 is placed between a capsule holder 110 and an enclosing member 120. The enclosing member 120 is moved towards the capsule holder 110 to enclose the capsule 10.

The enclosing member 120 comprises a shape substantially corresponding to the shape of the body of the capsule 10. In this example, the enclosing member 120 comprises a frustoconical shape. In other examples, the enclosing member may comprise a substantially semispherical shape. The enclosing member defines a brewing chamber to receive the capsule 10. An inner wall 121 faces the sidewall 23 of the capsule 10. The inner wall 121 is substantially parallel to the sidewall 23 of the capsule 10. The enclosing member 120 may be moved towards the capsule holder 110 to close or retain the capsule in between.

In a closed situation, the flange of the capsule may be pressed between a pressing portion 140 of the enclosing member 120 and the capsule holder 110. As the sealing member 40 is arranged on the upper side of the flange, the sealing member is pressed by the pressing portion 140 of the enclosing member 120. The sealing member 40 may thus be clamped between the pressing portion 140 and the upper side of the flange.

The beverage production device 100 of this figure comprises a cutting element 130 to perforate the upper portion of the capsule. In this figure, the cutting element 130 is arranged to create an aperture in the flat side of the upper portion of the capsule. Hot water may then be introduced inside the capsule through this aperture. This hot water may also be pressurized. The water inside the capsule interacts with particles contained in the capsule and the pressure inside increases. This pressure increases inside the capsule and causes a deformation of the closing member 30. Relief elements arranged on the capsule holder 10 may then tear the closure member 30 forming a plurality of openings to allow the beverage to exit from inside the capsule.

When water is inserted inside the capsule a water leakage may occur. This water leakage can flow through the gap between the sidewall 123 and the inner wall 121 of the enclosing member 120. The sealing member 40 prevents this water leakage from flowing outside the space defined between the enclosing member 120 and the capsule holder 110.

The sealing member 40 according to this disclosure comprises an outer layer to face the pressing portion 140 of the enclosing member 120. In this example, the pressing portion 140 comprises a serrated shape. This serrated shape may facilitate to extract the capsule from the beverage production device. As the outer layer is made from a mass-colored cellulose material, when a water leakage reaches the sealing member 40, the water is absorbed by the cellulose material. Then, the cellulose material expands and fits the serrated shape of the pressing portion 140.

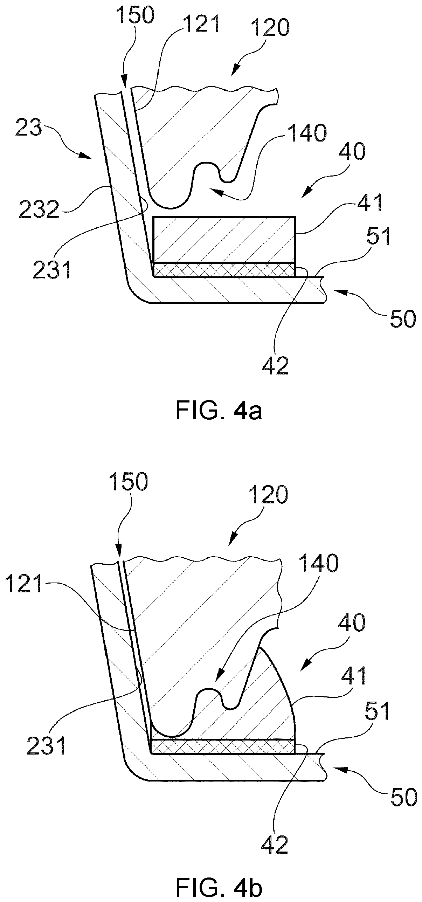

Figure 4a and 4b respectively shows a zoom-in view of the sealing member in non-expanded configuration and in an expanded configuration according to an example of the present disclosure. In Figure 4a, the enclosing member 120 is not completely closing the capsule and the sealing member 40 is not pressed between the upper portion 51 and pressing portion 140.

The sealing member 40 comprises an outer layer 41 and an inner layer 42. The inner layer 42 is adhesive to adhere the sealing member to the upper side 51 of the flange 50. The outer layer 41 is made of a mass-colored cellulose material.

The sidewall 23 of the capsule comprises an outer side 231 and an inner side 232. A gap 150 is formed between the inner side 232 of the sidewall 23 and the inner wall 121 of the enclosing member 120. Water leakage may flow through this gap 150 towards the sealing member 40. This water leakage may be absorbed by the outer layer 41 of the sealing member as schematically illustrated in Figure 4b.

In figure 4b, the enclosing member 120 is closed and the outer layer 41 is in an expanded configuration. Water leakage flowing through the gap 150 has been absorbed through the pores of the outer layer 41 made from a mass-colored cellulose material. This water enters inside the outer layer and fills the inner pores. Consequently, volume of the outer layer is increased.

This increase in volume may cause the outer layer 41 to fit the shape of the pressing portion 140. In the example of figure 4b, the outer layer 41 is in an expanded configuration and has a shape substantially corresponding to the serrated shape of the pressing portion 140.

In these figures, the pressing portion 140 comprises a serrated shape having a pair of peaks and a valley arranged there between. In figure 4b, the outer layer 41 adopts a shape corresponding to the serrated shape of the pressing portion. The outer layer 41 at least partially fills the valley created between the two peaks.

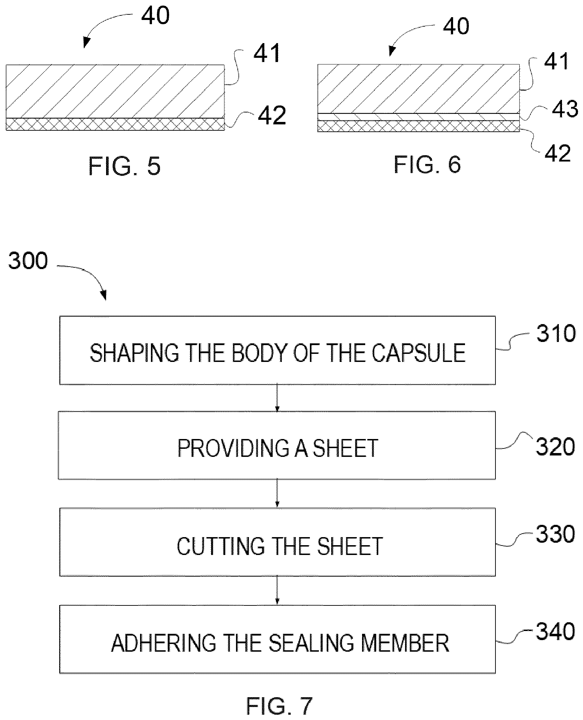

Figure 5 schematically represents a cross-sectional view of the sealing member according to an example of the present disclosure. In this example, the sealing member comprises two layers. An inner layer 42 made from adhesive is adhered to an outer layer 41 made from a mass-colored cellulose material, e.g. a mass-colored paper. The color of the outer layer 41 is substantially uniform along its thickness, i.e. the density of the colorants in the outer layer is substantially uniform.

Figure 6 represents a cross-sectional view of the sealing member according to another example of the present disclosure. In this example, the sealing member comprises an intermediate layer 43 arranged between the outer layer 41 and the inner layer 42. The inner layer 42 and the outer layer 41 are according to any of the examples herein described. The intermediate layer 43 comprises a water-repellent material. This water-repellent material protects the adhesive of the inner layer 42 against water. Water may reduce the adhering capacity of the adhesive. The water-repellent material may be aluminum or a water-repellent paper.

In this example, the mass-colored cellulose material is connected to the water-repellent material. An adhesive layer is applied to the intermediate layer made from the water-repellent material.

In some examples, the sealing member, e.g. with an intermediate layer and without the intermediate layer, may comprise a thickness between 200 µm and 700 µm, optionally between 330 µm and 550 µm. This size allows the capsule to be adapted to a huge range of beverage production devices.

In some examples, the grammage of the outer layer, e.g. of the outer layer made from a mass-colored paper, is between 150 and 250 gr/m², optionally between 170 and 220 gr/m². This grammage may provide a sufficient elasticity to deform and to adopt the shape of the pressing portion of the enclosing member.

As previously described, the porosity of the outer layer according to any of the examples herein disclosed is not adversely by the color, since the colorants are introduced during the manufacturing of the cellulose material. In some examples, the porosity of the outer layer is 550 and 800 cm³/min according to the Bendtsen porosity test defined in ISO 5636-3:2013. These values ensure a sufficient porosity to absorb water. The porosity of the outer layer is thus comparable to a porosity of a layer made of a non-painted cellulose material.

The Bendtsen test is used for determining the air permeance of a cellulose material, e.g. paper, using a Bendsen apparatus. The Bendtsen porosity tests measures the air permeability by applying an air flow to a side of a sample and measuring the air flow at the opposite side of the sample.

In some examples, the outer layer of the sealing member comprises a water absorptiveness between 200 and 300 g/m2 according to the Cobb test at 60 seconds defined in ISO 535:2014. A sufficient water absorptiveness is thus obtained. The Cobb test at 60 seconds determines the amount of water that is absorbed by a sample that has one side in contact with water within 60 seconds. To provide a good air permeance and water absorptiveness, the cellulose material is mainly formed by relative long fibers.

In some examples, sodium polyacrylate may be added to the cellulose material to increase the water absorbing capacity. Sodium polyacrylate may also increase the mechanical stability of the cellulose material.

In some examples, the outer layer of the sealing member comprises an internal bond strength between 150 and 250 J/m2 according to the Scott test defined in TAPPI T569. The Scott test is used to determine the internal strength of a cellulose material such as paper and measures the energy required to delaminate the cellulose material. Peeling off or delamination problems of the cellulose material may thus be reduced.

In some examples, colloidal silica is added to the manufacturing of the cellulose material. Colloidal silicas are generally suspensions of fine amorphous and spherical silica particles. The colloidal silicas may improve the internal consistency of the cellulose material. This may reinforce the joining between fibers. Delamination of the cellulose material may consequently be reduced.

To reduce the effect of the water on the resistance of the cellulose material, polymers made from epichlorohydrin may be added to the cellulose material. For example, polyamide-epichlorohydrin (PAE) resins may be used as a wet-strength agent, i.e. to increase the resistance of the cellulose material when the cellulose material is wet.

Figure 7 is a block diagram of a method 300 of manufacturing a capsule according to any of the examples herein disclosed.

At block 310, shaping the body of the capsule is represented. In some examples, a capsule having an aluminum body may be stamped, deep-drawn or extruded. In some examples, a roll forming technique may be used to form a circular perimeter edge of the flange.

At block 320, providing a sheet having a mass-colored cellulose material layer and an adhesive layer to respectively form the outer layer and the inner layer of the sealing member is represented. The sheet thus comprises a cellulose material layer and an adhesive layer. In some examples, the sheet may additionally comprise an intermediate layer formed by a water-repellent material. This intermediate layer is arranged between the mass-colored cellulose material layer and the adhesive layer.

Then, the sheet is cut to form the sealing member as represented at block 330. A cutting element is used to obtain the annular shape of the sealing member. After that, the sealing member is adhered to the upper side of the annular flange trough the adhesive layer as represented at block 340. The sealing member is placed on the upper side of the annular flange such that the adhesive layer faces the upper side of the annular flange. Accordingly, the adhesive layer is the inner layer and the mass-colored cellulose material layer is the outer layer.

In some examples, adhering the sealing member to the upper side of the annular flange comprises pressing the sealing member against the annular flange. A support element may be used to hold the capsule and a pressing element, e.g. having an annular pressing surface, may be employed to press the sealing member against the annular flange. The flange of the capsule may thus be clamped between the pressing element and the support element. The sealing member may be pressed during a predetermined time, e.g. during the adhering process takes place. Pressing the sealing member against the annular flange may increase the adherence capacity of the adhesive of the inner layer of the sealing member. Dust or dirt on the upper surface of the flange may thus be counteracted.

In some examples, the adhesive is melted while the sealing member is pressed against the annular flange. Heat may be applied to the adhesive of the sealing member. For example, the adhesive may be heated between 200°C and 300°C. Melting the adhesive may improve the uniformity of the adherence.

Several heating techniques may be used for heating the adhesive. For example, the pressing element may comprise a heating element, e.g. an electrical heater and/or an inductor, to heat the heating element. In other examples, the support element may comprise a heating element. An external heating element, e.g. arranged around the flange of the capsule, may be arranged for heating the adhesive.

In some examples, melting the adhesive comprises heating the upper portion of the body of the capsule with a heating device and conducting the heat through the body to heat the adhesive. For example, bodies of aluminum may thus be used to conduct heat from the upper portion to the adhesive through the sidewall and the flange. The heating element may heat the upper body to a temperature between 200 °C and 300°C. The heating element may be an inductor or an electrical heater. In some examples, the capsule may also be heated by a Joule effect. Heating the upper portion of the capsule to melt the adhesive may simplify the pressing element and the supporting element.

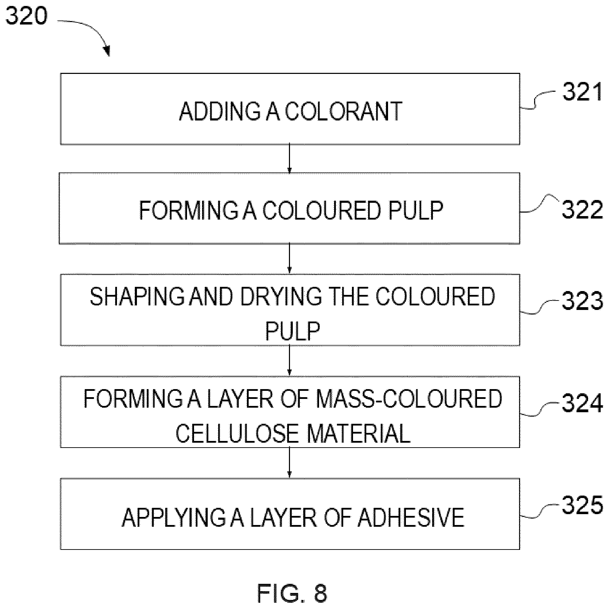

Figure 8 is a block diagram of a method of providing 320 a sheet having a mass-colored cellulose material layer and an adhesive layer. Providing the sheet with the mass-colored cellulose material layer and the adhesive layer is a step of the method of manufacturing a capsule according to any of the examples herein disclosed.

Providing 320 the sheet comprises adding a colorant to a mix of cellulose fibers and water as represented at block 321. The colorant is added to the mix of cellulose fibers and water during the manufacturing of the cellulose material. The mix of cellulose and water may be contained in a container. In addition to the colorant, several additives may be added such as sodium polyacrylate, polyamide-epichlorohydrin (PAE) resins or colloidal silicas.

The colorant, the mix of cellulose fibers, water and optional additives are mixed and stirred to form a colored pulp as represented at block 322. Several pulping technologies may be employed to obtain the colored pulp. For example, pulping mechanical processes and/or chemical processes may be used to form the colored pulp.

Then, the colored pulp is shaped and dried as represented at block 323. Water is removed from the colored pulp. For example, the colored pulp may be arranged at a moving belt having a fine mesh screening surface. Water may be removed through this fine mesh screening surface. In addition, rollers may be used to press the colored pulp against the mesh screening surface to increase the amount of water to be removed. A mass-colored cellulose material may thus be obtained

At block 324, a layer of mass-colored cellulose material is formed. This may involve pressing the mass-colored cellulose material. The mass-colored cellulose material may pass through a plurality of rollers to obtain a desired thickness. In some examples, the rollers may be heated to further dry the mass-colored cellulose material. After the mechanical action of the plurality of rollers a layer of mass-colored cellulose material is obtained. In some examples, this mass-colored cellulose material is a mass-colored paper.

A layer of adhesive is applied to the layer of mass-colored cellulose material as represented at block 325. A sheet having one side of mass-colored cellulose material and the opposite side of adhesive may thus be obtained. In some examples, an intermediate layer according to any of the examples herein disclosed may be arranged between the mass-colored cellulose material layer and the adhesive layer. The sheet having one side of mass-colored cellulose material and the opposite side of adhesive may be used for forming the sealing member according to any of the examples herein disclosed.

## Claims

1. A capsule (10) for containing beverage ingredients configured to be inserted in a beverage production device (100), the capsule (10) comprising:
a body (20) defining a cavity to contain beverage ingredients comprising:
- an upper portion (21) and a lower portion (22);
- a sidewall (23) extending from the upper portion to the lower portion;
- wherein the lower portion (22) comprises an annular flange (50) outwardly extending from the sidewall (23), the annular flange (50) comprising an upper side (51) facing towards the upper portion (21) of the body (20);
a sealing member (40) arranged on the upper side (51) of the annular flange (50); wherein the sealing member (40) comprises:
- an inner layer (42) facing the upper side (51) of the annular flange (50) comprising an adhesive;
**characterized in that** the sealing member (40) further comprises an outer layer (41) having a mass-colored cellulose material.

2. A capsule (10) according to claim 1, wherein the outer layer (41) of the sealing member (40) is configured to absorb a predetermined amount of water.

3. A capsule (10) according to claim 2, wherein the outer layer (41) of the sealing member (40) is configured to expand when water is absorbed.

4. A capsule (10) according to any of claims 1-3, wherein a color of the outer layer (41) of the sealing member (40) is substantially uniform along the whole thickness of the outer layer (41).

5. A capsule (10) according to any of claims 1-4, wherein the outer layer (41) of the sealing member (40) comprises a porosity between 550 and 800 cm³/min according to the Bendtsen porosity test defined in ISO 5636-3:2013.

6. A capsule (10) according to any of claims 1-5, wherein the outer layer (41) of the sealing member (40) comprises a water absorptiveness between 200 and 300 g/m² according to the Cobb test at 60 seconds defined in ISO 535:2014.

7. A capsule (10) according to any of claims 1-6, wherein the outer layer (41) of the sealing member (41) comprises an internal bond strength between 150 and 250 J/m² according to the Scott test defined in TAPPI T569.

8. A capsule (10) according to any of claims 1-7, wherein the mass-colored cellulose material is a mass-colored paper or a mass-colored cardboard.

9. A capsule (10) according to any of claims 1 - 8, wherein the sealing member (40) comprises an intermediate layer (43) between the outer layer (41) and the inner layer (42) and wherein the intermediate layer (43) comprises a water-repellent material.

10. A capsule (10) according to claim 9, wherein the water-repellent material comprises aluminum and/or a water-repellent paper.

11. A capsule (10) according to any of claims 1 - 10, wherein the thickness of the sealing member (40) is between 200 µm and 700 µm, optionally between 330 µm and 550 µm.

12. A method (300) of manufacturing a capsule (10) according to any of claims 1 - 11, the method comprising:
shaping (310) the body (20) of the capsule (10);
providing (320) a sheet comprising a mass-colored cellulose material layer and an adhesive layer to respectively form the outer layer (41) and the inner layer (42) of the sealing member (40);
cutting (330) the sheet to form the sealing member (40); and
adhering (340) the sealing member (40) to the upper side (51) of the annular flange (50) through the adhesive of the inner layer (42) of the sealing member (40).

13. A method (300) of manufacturing a capsule (10) according to claim 12, wherein adhering (340) the sealing member (40) to the upper side (51) of the annular flange (50) comprises pressing the sealing member (40) against the annular flange (50) and melting the adhesive.

14. A method (300) of manufacturing a capsule (10) according to claim 13, wherein melting the adhesive comprises heating the upper portion (21) of the body (20) with a heating device and conducting the heat through the body to heat the adhesive.

15. A method (300) of manufacturing a capsule (10) according to any of claims 12 - 14, wherein providing (320) the sheet comprises:
adding (321) a colorant to a mix of cellulose fibers and water;
forming (322) a colored pulp;
shaping and drying (323) the colored pulp;
forming (324) a layer of mass-colored cellulose material; and
applying (325) a layer of adhesive to the layer of mass-colored cellulose material.

## Patentansprüche

1. Eine Kapsel (10) zum Enthalten von Getränkezutaten, die dazu konfiguriert sind, in eine Getränkeherstellungsvorrichtung (100) eingeführt zu werden, wobei die Kapsel (10) Folgendes umfasst:
einen Körper (20), der einen Hohlraum definiert, um Getränkezutaten zu enthalten, umfassend:
- einen oberen Abschnitt (21) und einen unteren Abschnitt (22);
- eine Seitenwand (23), die sich von dem oberen Abschnitt zu dem unteren Abschnitt erstreckt;
- wobei der untere Abschnitt (22) einen ringförmigen Flansch (50) umfasst, der sich von der Seitenwand (23) nach außen erstreckt, wobei der ringförmige Flansch (50) eine Oberseite (51) umfasst, die dem oberen Abschnitt (21) des Körpers (20) zugewandt ist;
ein Dichtungselement (40), das an der Oberseite (51) des ringförmigen Flansches (50) angeordnet ist; wobei das Dichtungselement (40) Folgendes umfasst:
- eine innere Schicht (42), die der Oberseite (51) des ringförmigen Flansches (50) zugewandt ist und einen Klebstoff umfasst;
**dadurch gekennzeichnet, dass** das Dichtungselement (40) weiterhin eine Außenschicht (41) mit einem massengefärbten Cellulosematerial umfasst.

2. Eine Kapsel (10) nach Anspruch 1, wobei die äußere Schicht (41) des Dichtungselements (40) konfiguriert ist, um eine vorbestimmte Menge an Wasser zu absorbieren.

3. Eine Kapsel (10) nach Anspruch 2, wobei die äußere Schicht (41) des Dichtungselements (40) konfiguriert ist, um sich auszudehnen, wenn Wasser absorbiert wird.

4. Eine Kapsel (10) nach einem der Ansprüche 1 bis 3, wobei eine Farbe der äußeren Schicht (41) des Dichtungselements (40) im Wesentlichen über die gesamte Dicke der äußeren Schicht (41) gleichmäßig ist.

5. Eine Kapsel (10) nach einem der Ansprüche 1 bis 4, wobei die äußere Schicht (41) des Dichtungselements (40) eine Porosität zwischen 550 und 800 cm³/min gemäß dem in ISO 5636-3:2013 definierten Bendtsen-Porositätstest umfasst.

6. Eine Kapsel (10) nach einem der Ansprüche 1 bis 5, wobei die äußere Schicht (41) des Dichtungselements (40) ein Wasserabsorptionsvermögen zwischen 200 und 300 g/m² gemäß dem in ISO 535:2014 definierten Cobb-Test bei 60 Sekunden umfasst.

7. Eine Kapsel (10) nach einem der Ansprüche 1 bis 6, wobei die äußere Schicht (41) des Dichtungselements (41) eine innere Klebkraft zwischen 150 und 250 J/m² gemäß dem in TAPPI T569 definierten Scott-Test umfasst.

8. Eine Kapsel (10) nach einem der Ansprüche 1 bis 7, wobei das massengefärbte Cellulosematerial ein massengefärbtes Papier oder ein massengefärbter Karton ist.

9. Eine Kapsel (10) nach einem der Ansprüche 1 bis 8, wobei das Dichtungselement (40) eine Zwischenschicht (43) zwischen der äußeren Schicht (41) und der inneren Schicht (42) umfasst und wobei die Zwischenschicht (43) ein wasserabweisendes Material umfasst.

10. Eine Kapsel (10) nach Anspruch 9, wobei das wasserabweisende Material Aluminium und/oder ein wasserabweisendes Papier umfasst.

11. Eine Kapsel (10) nach einem der Ansprüche 1 bis 10, wobei die Dicke des Dichtungselements (40) zwischen 200 µm und 700 µm, wahlweise zwischen 330 µm und 550 µm, beträgt.

12. Ein Verfahren (300) zum Herstellen einer Kapsel (10) nach einem der Ansprüche 1 bis 11, wobei das Verfahren Folgendes umfasst:
formen (310) des Körpers (20) der Kapsel (10);
bereitstellen (320) einer Folie, die eine massengefärbte Zellulosematerialschicht und eine Klebstoffschicht umfasst, um jeweils die äußere Schicht (41) und die innere Schicht (42) des Dichtungselements (40) zu bilden;
schneiden (330) der Folie, um das Dichtungselement (40) zu bilden; und
anhaften (340) des Dichtungselements (40) an die obere Seite (51) des ringförmigen Flansches (50) durch den Klebstoff der inneren Schicht (42) des Dichtungselements (40).

13. Ein Verfahren (300) zum Herstellen von einer Kapsel (10) nach Anspruch 12, wobei das Anhaften (340) des Dichtungselements (40) an der oberen Seite (51) des ringförmigen Flansches (50) das Pressen des Dichtungselements (40) gegen den ringförmigen Flansch (50) und das Schmelzen des Klebstoffs umfasst.

14. Ein Verfahren (300) zum Herstellen von einer Kapsel (10) nach Anspruch 13, wobei das Schmelzen des Klebstoffs das Erwärmen des oberen Abschnitts (21) des Körpers (20) mit einer Heizvorrichtung und das Leiten der Wärme durch den Körper zum Erwärmen des Klebstoffs umfasst.

15. Ein Verfahren (300) zum Herstellen von einer Kapsel (10) nach einem der Ansprüche 12 bis 14, wobei das Bereitstellen (320) der Folie Folgendes umfasst:
Hinzufügen (321) eines Farbstoffs zu einer Mischung aus Cellulosefasern und Wasser;
Ausbilden (322) eines gefärbten Zellstoffs;
Formen und Trocknen (323) des gefärbten Zellstoffs;
Bilden (324) einer Schicht aus massengefärbtem Cellulosematerial; und
Auftragen (325) einer Klebstoffschicht auf die Schicht aus massengefärbtem Cellulosematerial.

## Revendications

1. Une capsule (10) pour contenir des ingrédients de boisson configurée pour être insérée dans un dispositif de production de boissons (100), la capsule (10) comprenant :
un corps (20) définissant une cavité pour contenir des ingrédients de boisson comprenant :
- une partie supérieure (21) et une partie inférieure (22) ;
- une paroi latérale (23) s'étendant de la partie supérieure à la partie inférieure ;
- dans lequel la partie inférieure (22) comprend une bride annulaire (50) s'étendant vers l'extérieur à partir de la paroi latérale (23), la bride annulaire (50) comprenant un côté supérieur (51) orienté vers la partie supérieure (21) du corps (20) ;
un élément d'étanchéité (40) agencé sur le côté supérieur (51) de la bride annulaire (50) ; dans lequel l'élément d'étanchéité (40) comprend :
- une couche intérieure (42) orientée vers le côté supérieur (51) de la bride annulaire (50) comprenant un adhésif ;
**caractérisée en ce que** l'élément d'étanchéité (40) comprend en outre une couche extérieure (41) ayant un matériau cellulosique coloré en masse.

2. Une capsule (10) selon la revendication 1, dans laquelle la couche extérieure (41) de l'élément d'étanchéité (40) est configurée pour absorber une quantité prédéterminée d'eau.

3. Une capsule (10) selon la revendication 2, dans laquelle la couche extérieure (41) de l'élément d'étanchéité (40) est configurée pour se dilater lorsque l'eau est absorbée.

4. Une capsule (10) selon l'une quelconque des revendications 1 à 3, dans laquelle une couleur de la couche extérieure (41) de l'élément d'étanchéité (40) est sensiblement uniforme sur toute l'épaisseur de la couche extérieure (41).

5. Une capsule (10) selon l'une quelconque des revendications 1 à 4, dans laquelle la couche extérieure (41) de l'élément d'étanchéité (40) comprend une porosité comprise d'entre 550 et 800 cm³/min selon le test de porosité de Bendtsen défini dans ISO 5636-3:2013.

6. Une capsule (10) selon l'une quelconque des revendications 1 à 5, dans laquelle la couche extérieure (41) de l'élément d'étanchéité (40) comprend une capacité d'absorption d'eau d'entre 200 et 300 g/m² selon le test de Cobb à 60 secondes défini dans ISO 535:2014.

7. Une capsule (10) selon l'une quelconque des revendications 1 à 6, dans laquelle la couche extérieure (41) de l'élément d'étanchéité (41) comprend une résistance d'adhésion interne d'entre 150 et 250 J/m² selon le test de Scott défini dans TAPPI T569.

8. Une capsule (10) selon l'une quelconque des revendications 1 à 7, dans laquelle le matériau cellulosique coloré en masse est un papier coloré en masse ou un carton coloré en masse.

9. Une capsule (10) selon l'une quelconque des revendications 1 à 8, dans laquelle l'élément d'étanchéité (40) comprend une couche intermédiaire (43) entre la couche extérieure (41) et la couche intérieure (42) et dans laquelle la couche intermédiaire (43) comprend un matériau hydrofuge.

10. Une capsule (10) selon la revendication 9, dans laquelle le matériau hydrofuge comprend de l'aluminium et/ou un papier hydrofuge.

11. Une capsule (10) selon l'une quelconque des revendications 1 à 10, dans laquelle l'épaisseur de l'élément d'étanchéité (40) est comprise entre 200 µm et 700 µm, facultativement entre 330 µm et 550 µm.

12. Un procédé (300) de fabrication d'une capsule (10) selon l'une quelconque des revendications 1 à 11, le procédé comprenant :
mettre en forme (310) le corps (20) de la capsule (10) ;
fournir (320) une feuille comprenant une couche de matériau cellulosique colorée en masse et une couche adhésive pour former respectivement la couche extérieure (41) et la couche intérieure (42) de l'élément d'étanchéité (40) ;
couper (330) la feuille pour former l'élément d'étanchéité (40) ; et
coller (340) l'élément d'étanchéité (40) sur le côté supérieur (51) de la bride annulaire (50) à travers l'adhésif de la couche interne (42) de l'élément d'étanchéité (40).

13. Un procédé (300) de fabrication d'une capsule (10) selon la revendication 12, dans lequel l'adhésion (340) de l'élément d'étanchéité (40) au côté supérieur (51) de la bride annulaire (50) comprend la pression de l'élément d'étanchéité (40) contre la bride annulaire (50) et la fusion de l'adhésif.

14. Un procédé (300) de fabrication d'une capsule (10) selon la revendication 13, dans lequel la fusion de l'adhésif comprend le chauffage de la partie supérieure (21) du corps (20) avec un dispositif de chauffage et la conduite de la chaleur à travers le corps pour chauffer l'adhésif.

15. Un procédé (300) de fabrication d'une capsule (10) selon l'une quelconque des revendications 12 à 14, dans lequel la fourniture (320) de la feuille comprend :
ajouter (321) un colorant à un mélange de fibres de cellulose et d'eau ;
former (322) une pâte colorée ;
façonner et sécher (323) la pâte colorée ;
former (324) une couche de matériau cellulosique coloré en masse ; et
appliquer (325) une couche d'adhésif sur la couche de matériau cellulosique coloré en masse.
